(19) Europäisches Patentamt
European Patent Office
Office européen des brevets

(11) Numéro de publication : **0 285 506 B2**

# (12) NOUVEAU FASCICULE DE BREVET EUROPEEN

(45) Date de publication du nouveau fascicule du brevet : **30.06.93 Bulletin 93/26**

(51) Int. Cl.$^5$ : **C04B 24/00**

(21) Numéro de dépôt : **88400723.8**

(22) Date de dépôt : **24.03.88**

## (54) Utilisation de composés tensio-actifs polyfluores comme agents plastifiants réducteurs d'eau dans les mortiers et bétons.

Le dossier contient des informations techniques présentées postérieurement au dépôt de la demande et ne figurant pas dans le présent fascicule.

(30) Priorité : **02.04.87 FR 8704621**

(43) Date de publication de la demande : **05.10.88 Bulletin 88/40**

(45) Mention de la délivrance du brevet : **16.01.91 Bulletin 91/03**

(45) Mention de la décision concernant l'opposition : **30.06.93 Bulletin 93/26**

(84) Etats contractants désignés : **AT BE CH DE ES FR GB IT LI NL SE**

(56) Documents cités : **FR-A- 2 088 699**

(56) Documents cités :
**FR-A- 2 575 457**
**US-A- 2 727 923**
**US-A- 4 293 440**
**US-A- 4 328 145**
**US-A- 4 362 762**
**CHEMICAL ABSTRACTS, vol. 101, no. 22, 26 novembre 1984, page 305, résumé no. 197088t, Columbus, Ohio, US; & JP-A-59 97 562 (SANYO CHEMICAL INDUSTRIES LTD et al.) 05-06-1984**
**R.GRITZKY, Fette-Seifen-Anstrichmittel, 39-71 (no. 11), 1969, p. 972-975**

(73) Titulaire : **ELF ATOCHEM S.A.**
**4 & 8, Cours Michelet La Défense 10**
**F-92800 Puteaux (FR)**

(72) Inventeur : **Boutevin, Bernard**
**Les Terres Blanches 1 Rue Anselme Mathieu**
**F-34000 Montpellier (FR)**

(74) Mandataire : **Leboulenger, Jean et al**
**ATOCHEM Département Propriété Industrielle**
**F-92091 Paris la Défense 10 Cédex 42 (FR)**

EP 0 285 506 B2

## Description

La présente invention concerne le domaine des matériaux de construction et, plus particulièrement, celui des mortiers et bétons destinés à la construction de bâtiments ou aux travaux publics.

On sait que la quantité d'eau utilisée dans la préparation d'un mortier ou d'un béton est toujours supérieure à celle théoriquement nécessaire pour obtenir une bonne hydratation du ciment. L'excès d'eau est cependant nécessaire pour que le mortier ou béton frais soit bien ouvrable, c'est-à-dire suffisamment maniable et facilement coffrable. Mais, en même temps, cet excès d'eau présente des inconvénients car il entraîne une diminution des résistances mécaniques, une moindre homogénéité, un ressuage, une ségrégation, ainsi qu'un certain retard de prise.

Pour réduire la quantité d'eau sans nuire à l'ouvrabilité des mortiers et des bétons, il est connu d'y incorporer des agents mouillants, appelés couramment "plastifiants-réducteurs d'eau". Parmi les produits employés à cet effet, on peut citer les lignosulfonates, les sels alcalins d'hydrocarbures styréno-indéniques sulfonés, les alkylphénols polyéthoxylés, les polycondensats mélamine-formol, acide naphtalènesulfonique-formol ou mélamine-phénol-formol, divers homopolymères ou copolymères solubles dans l'eau, ainsi que des organo-siloxanes.

Le brevet US 4 328 145 décrit l'emploi d'un sel d'acide carboxylique fluoré pour améliorer les propriétés de mortiers allégés contenant à la fois un plastifiant (par exemple un polycondensat mélamine-formol) et un agent entraîneur d'air (par exemple une résine vinsol).

Il a maintenant été trouvé que les agents tensio-actifs comportant au moins un groupement perfluoré et au moins un groupement hydrophile, polyacrylamide sont d'excellents plastifiants-réducteurs d'eau et ceci même lorsqu'ils sont employés à des doses très faibles. Il a également été constaté que certains d'entre eux ont en outre, à des doses encore relativement faibles, un effet entraîneur d'air marqué permettant la réalisation de mortiers et bétons allégés.

Les tensio-actifs polyfluorés à utiliser selon l'invention comportent au moins un groupement perfluoré et au moins un groupement hydrophile polyacrylamide, ces groupements pouvant être liés directement ou par l'intermédiaire d'un ou plusieurs chaînons bivalents.

Le ou les groupements perfluorés (désignés ci-après par le symbole $R_F$) sont de préférence des radicaux perfluoroalkyle linéaires ou ramifiés contenant de 2 à 20 atomes de carbone et avantageusement de 4 à 14 atomes de carbone.

Quand les groupements perfluorés et hydrophiles ne sont pas directement liés, le ou les chaînons de liaison peuvent être de nature très diverse. Le type de chaînon le plus simple est constitué par un pont alkylène, notamment polyméthylène et surtout éthylène ou propylène. La liaison de ce pont alkylène avec les groupements perfluorés et hydrophiles peut être faite directement ou par l'intermédiaire d'un groupe fonctionnel (par exemple, éther, thioéther, ester, sulfonamide, carboxamide). Un tel groupe fonctionnel peut aussi être présent entre deux ou plusieurs chaînons alkylène. Ces derniers peuvent éventuellement porter des substituants tels que des groupes hydroxy ou des atomes d'halogène (chlore notamment) comme, par exemple, dans les chaînons $-CCl_2-$ ou $-CHCl-CH_2-CCl_2-$.

Comme exemples d'agents tensio-actifs polyfluorés selon l'invention, on peut citer plus particulièrement et à titre non limitatif :

1/ Les copolymères statistiques obtenus par polymérisation radicalaire de l'acrylamide et d'un acrylate polyfluoré de formule :

$$R_F(CH_2)_n-OCOC(R_7)=CH_2 \qquad (V)$$

où n est un nombre entier allant de 1 à 12, de préférence égal à 2 et $R_7$ représente un atome d'hydrogène ou un radical méthyle, le rapport molaire acrylamide/acrylate étant de préférence compris entre 10 et 200.

2/ Les cotélomères statistiques obtenus par télomérisation rédox de l'acrylamide et d'un acrylate polyfluoré de formule (V) ci-dessus, sur le tétrachlorure de carbone, le rapport molaire acrylamide/acrylate étant de préférence compris entre 10 et 500.

3/ Les télomères séquencés décrits dans les brevets EP 19584, 188952 et 189698 dérivés d'acrylamide correspondant aux formules suivantes :

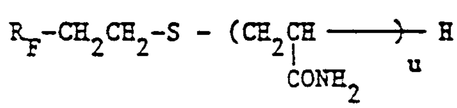 (VI)

$$R_F-(CH_2)_m-(CH_2\underset{\underset{CONH_2}{|}}{CH}\longrightarrow)_u-I \qquad (VII)$$

$$R_F-CH_2CH_2-OCO-CCl_2-(CH_2\underset{\underset{CONH_2}{|}}{CH}\longrightarrow)_u-Cl \qquad (VIII)$$

$$R_F-CH_2CH_2-OCO-CHCl-CH_2-CCl_2-(CH_2\underset{\underset{CONH_2}{|}}{CH}\longrightarrow)_u-Cl \qquad (IX)$$

dans lesquelles m est un nombre entier allant de 0 à 12, de préférence égal à 0 ou 2 et u est un nombre entier allant de 5 à 1000, de préférence compris entre 10 et 700.

Les tensio-actifs polyfluorés selon l'invention procurent un effet plastifiant-réducteur d'eau trés élevé et peuvent par conséquent être employés à des doses trés faibles. Celles-ci sont généralement comprises entre 0,005 et 2 % par rapport au poids d'eau et, de préférence, entre 0,01 et 0,5 % .

Parmi les composés précités, se sont révélés particulièrement avantageux les télomères séquencés de formules (VI) et (VII) qui sont trés efficaces même à des doses et des teneurs en fluor extrêmement faibles.

Dans les exemples suivants où les pourcentages s'entendent en poids et qui illustrent l'invention sans la limiter, l'efficacité plastifiante des tensio-actifs polyfluorés selon l'invention a été évaluée suivant le test du cône d'Abrams (connu aussi sous le nom de "slump-test").

Ce test qui permet d'apprécier la plasticité d'un mortier ou d'un béton consiste à en remplir un moule en forme de tronc de cône (hauteur : 150 mm, diamètre supérieur : 50 mm, diamètre inférieur : 100 mm) et à mesurer l'affaissement du cône ("slump"), c'est-à-dire la différence entre la hauteur initiale (150 mm) et celle du cône après démoulage.

Les résistances mécaniques en traction-flexion et en compression ont été déterminées selon la norme NF P 15-451 sur des éprouvettes obtenues à l'aide d'un moule à trois compartiments de dimensions 4x4x16 cm (norme NF P 15-413). Le moule rempli de mortier ou de béton est placé sur une table vibrante (12000 Hz) pendant 70 secondes, puis les éprouvettes sont maintenues pendant 16 heures et demie dans une enceinte à atmosphère saturée d'eau à 50±1°C.

EXEMPLE 1 *(témoin)*

Dans un malaxeur normalisé (NF P 15-411), on introduit 225 g d'eau, puis 450 g de ciment (classification 55 R). Après 30 secondes de malaxage lent (61±5 tr/min), on ajoute 1350 g de sable de granulométrie constante (0 à 2 mm ; norme NF P 15-403). Après encore une minute de malaxage lent, on passe à une vitesse de 123±10 tr/min et maintient ce malaxage rapide pendant 4 minutes.

Soumis aux tests de plasticité et de résistance mécanique, le mortier témoin ainsi obtenu donne les résultats suivants :

| | |
|---|---|
| affaissement du cône : | 20 mm |
| résistance à la traction-flexion : | 5,23 mégapascals |
| résistance à la compression : | 24,7 mégapascals |

EXEMPLE 2

On opère comme à l'exemple 1, mais avec une réduction d'eau de 7 %, c'est-à-dire en utilisant seulement 209,25 g d'eau additionnée d'un cotélomère statistique d'acrylamide et d'acrylate de perfluorohexyl-2 éthyle sur le tétrachlorure de carbone.

Les résultats obtenus sont les suivants :

| | | |
|---|---|---|
| poids de cotélomère ............. | 1,5 g | 1,7 g |
| affaissement du cône ............ | 25 mm | 27 mm |
| résistance à la traction-flexion . | 5,56 MPa | 5,49 MPa |
| résistance à la compression ...... | 30 MPa | 28,9 MPa |

L'additif utilisé dans cet exemple a été préparé par cotélomérisation par catalyse rédox de 0,98 mole d'acrylamide et 0,02 mole d'acrylate $C_6F_{13}C_2H_4OCOCH=CH_2$ avec 0,01 mole de $CCl_4$. Le système catalytique est un mélange de trichlorure ferrique (0,008 mole) et de benzoïne (0,008 mole). Les réactifs sont dissous dans 100 ml d'acétonitrile et le mélange réactionnel est porté au reflux pendant 20 heures. Le cotélomère précipite ; il est ensuite filtré, lavé à l'éther éthylique et séché. Le cotélomère ainsi obtenu contient 1,37 % de fluor.

EXEMPLE 3

On répète l'exemple 2, mais on remplace le cotélomère statistique par l'un des produits suivants :
(A) Copolymère statistique obtenu par copolymérisation radicalaire à 80°C d'acrylamide (0,55 mole) et d'acrylate de perfluorohexyl-2 éthyle (0,145 mole) dans 560 ml d'acétonitrile en présence de 0,01 mole d'azobisisobutyronitrile. Teneur en fluor : 20 %.
(B) Télomère à 2,68 % de fluor dont la préparation à partir d'acrylamide et de trichloroacétate de perfluorohexyl-2 éthyle est décrite à l'exemple 13 du brevet EP 188 952.
(C) Télomère à 11,84 % de fluor dont la préparation à partir d'acrylamide et de tétrachloro-2,4,4,4 butyrate de perfluorohexyl-2 éthyle est décrite à l'exemple 11 du brevet EP 188 952.
(D) Télomère à 7,3 % de fluor obtenu par télomérisation radicalaire du perfluorohexyl-2 éthanethiol $C_6F_{13}C_2H_4SH$ avec l'acrylamide (brevet EP 19 584).
(E) Télomère à 1,65 % de fluor dont la préparation à partir d'acrylamide et d'iodure de perfluorohexyl-2 éthyle $C_6F_{13}C_2H_4I$ est décrite à l'exemple 11 du brevet EP 189 698
Le tableau (I) suivant indique, pour chaque produit, la quantité utilisée et les résultats obtenus :

TABLEAU I

| Additif fluoré | Quantité ajoutée (en mg) | Affaissement du cône (en mm) | Résistances (en MPa) à la traction-flexion | compression |
|---|---|---|---|---|
| A | 92,5 | 28 | 5,65 | 27,5 |
| B | 400 | 25 | 5,7 | 30,5 |
| C | 78 | 26 | 6,17 | 30,6 |
| D | 32,9 | 28 | 5,62 | 27 |
| E | 54 | 25 | 6,35 | 31,5 |

## Revendications

1. Dans la préparation d'un mortier ou d'un béton, l'utilisation comme agent plastifiant-réducteur d'eau d'un composé tensio-actif comportant au moins un groupement perfluoré et au moins un groupement hydrophile polyacrylamide, ces groupements pouvant être reliés directement ou par l'intermédiaire d'un ou plusieurs chaînons bivalents.

2. Utilisation selon la revendication 1, dans laquelle le ou les groupements perfluorés sont des radicaux perfluoroalkyle, linéaires ou ramifiés, contenant de 2 à 20 atomes de carbone, de préférence de 4 à 14 atomes de carbone.

3. Utilisation selon la revendication 2, dans laquelle le composé tensio- actif est un copolymère statistique résultant de la polymérisation radicalaire de l'acrylamide avec un acrylate polyfluoré de formule:

$$R_F(CH_2)_n\text{-}OCOC(R_7)\text{=}CH_2 \qquad (V)$$

où $R_F$ représente un radical perfluoroalkyle, n est un nombre entier allant de 1 à 12, de préférence égal à 2, et $R_7$ est un atome d'hydrogène ou un radical méthyle, le rapport molaire acrylamide/acrylate étant compris entre 10 et 200, ou un cotélomère statistique résultant de la télomérisation rédox de l'acrylamide et d'un acrylate polyfluoré de formule (V) sur le tétrachlorure de carbone, le rapport molaire acrylamide/acrylate étant compris entre 10 et 500.

4. Utilisation selon la revendication 2, dans laquelle le composé tensio- actif est choisi parmi les télomères séquencés de formules:

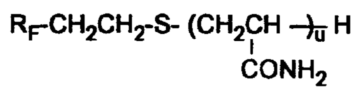

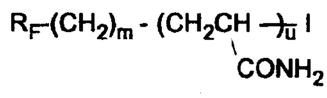

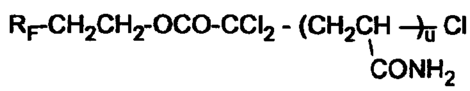

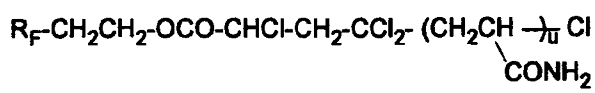

dans lesquelles $R_F$ représente un radical perfluoroalkyle, m est un nombre entier allant de 0 à 12, de préférence égal à 0 ou 2, et u est un nombre entier allant de 5 à 1000, de préférence compris entre 10 et 700.

5. Utilisation selon l'une des revendications 1 à 4, dans laquelle le composé tensio-actif polyfluoré est utilisé à une dose comprise entre 0,005 et 2%, de préférence entre 0,01 et 0,5%, par rapport au poids d'eau.

## Patentansprüche

1. Verwendung einer oberflächenaktiven Verbindung, die wenigstens eine perfluorierte Gruppe und wenigstens eine hydrophile Polyacrylamidgruppe aufweist, wobei diese Gruppen direkt oder über ein oder mehrere zweiwertige Kettenglieder verbunden sein können, als Weichmacher-Wasserreduzierendes Mittel bei der Herstellung eines Mörtels oder eines Betons.

2. Verwendung nach Anspruch 1, worin die perfluorierte(n) Gruppe(n) geradkettige oder verzweigte, 2 bis 20 Kohlenstoffatome, vorzugsweise 4 bis 14 Kohlenstoffatome enthaltende Perfluoralkylreste sind.

3. Verwendung nach Anspruch 2, worin die oberflächenaktive Verbindung ein aus der radikalischen Polymerisation von Acrylamid mit einem polyfluorierten Acrylat der Formel

$$R_F(CH_2)_n\text{-}OCOC(R_7)\text{=}CH_2 \qquad (V)$$

erhaltenes statistisches Copolymeres ist, worin $R_F$ einen Perfluoralkylrest bedeutet, n eine ganze Zahl von 1 bis 12 und vorzugsweise gleich 2, und $R_7$ ein Wasserstoffatom oder ein Methylrest und das Molverhältnis Acrylamid/Acrylat zwischen 10 und 200 ist, oder
ein statistisches Cotelomeres aus der Redoxtelomerisation des Acrylamids und eines polyfluorierten

Acrylates der Formel (V) mit Tetrachlorkohlenstoff ist, wobei das Molverhältnis Acrylamid/ Acrylat zwischen 10 und 500 beträgt.

4. Verwendung nach Anspruch 2, worin die oberflächenaktive Verbindung aus den Sequenztelomeren der Formeln

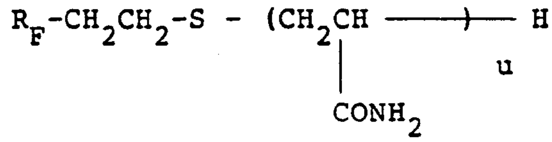

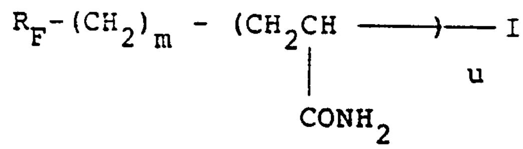

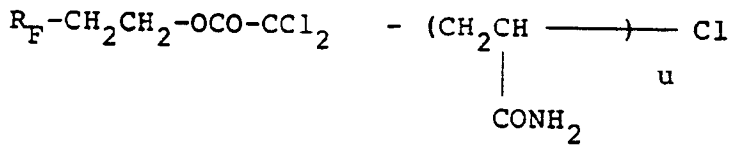

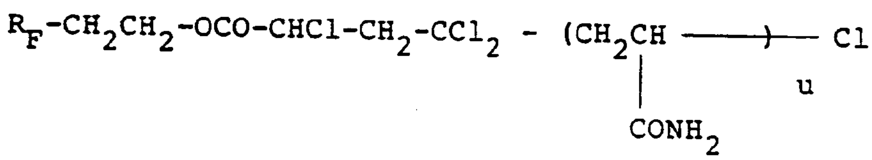

ausgewählt ist, worin $R_F$ einen Perfluoralkylrest bedeutet, m eine ganze Zahl von 0 bis 12 und vorzugweise gleich 0 oder 2, und u eine ganze Zahl von 5 bis 1000 und vorzugsweise zwischen 10 und 700 ist.

5. Verwendung nach einem der Ansprüche 1 bis 4, worin die polyfluorierte oberflächenaktive Verbindung in einem Anteil zwischen 0,005 und 2 % und vorzugsweise zwischen 0,01 und 0,5 %, bezogen auf das Gewicht des Wassers, eingesetzt wird.

**Claims**

1. In the preparation of a mortar or of a concrete, the use as plasticizing/water reducing agent of a surface-active compound containing at least one perfluorinated group and at least one polyacrylamide hydrophilic group, it being possible for these groups to be linked directly or by means of one or more bivalent chain members.

2. Use according to Claim 1, in which the perfluorinated group(s) is(are) linear or branched perfluoroalkyl radicals containing from 2 to 20 carbon atoms, preferably from 4 to 14 carbon atoms.

3. Use according to Claim 2, in which the surface-active compound is a random copolymer resulting from the radical polymerization of acrylamide with a polyfluorinated acrylate of formula:

$$R_F(CH_2)_n\text{-}OCOC(R_7)\text{=}CH_2 \qquad (V)$$

where $R_F$ denotes a perfluoroalkyl radical, n is an integer ranging from 1 to 12, preferably equal to 2, and $R_7$ is a hydrogen atom or a methyl radical, the acrylamide/ acrylate molar ratio being between 10 and 200, or a random cotelomer resulting from the redox telomerization of acrylamide and of a polyfluorinated acrylate of formula (V) with carbon tetrachloride, the acrylamide/acrylate molar ratio being between 10

and 500.

**4.** Use according to Claim 2, in which the surface-active compound is chosen from the block telomers of formulae:

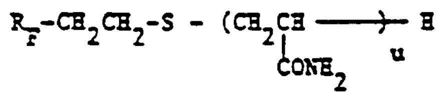

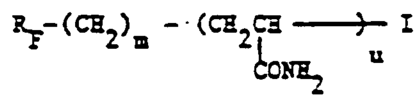

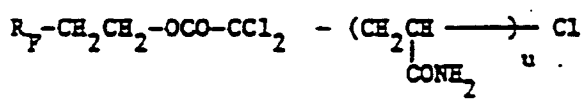

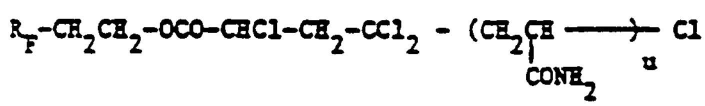

in which $R_F$ denotes a perfluoroalkyl radical, m is an integer ranging from 0 to 12, preferably equal to 0 or 2, and u is an integer ranging from 5 to 1000, preferably between 10 and 700.

**5.** Use according to one of Claims 1 to 4, in which the polyfluorinated surface-active compound is employed in a quantity of between 0.005 and 2 %, preferably between 0.01 and 0.5 %, relative to the weight of water.